# EUROPÄISCHE PATENTSCHRIFT

(11) **EP 1 092 260 B1**
(45) Veröffentlichungstag und Bekanntmachung des Hinweises auf die Patenterteilung: **08.04.2009**
(21) Anmeldenummer: 00912383.7
(22) Anmeldetag: 18.02.2000
(51) Int. Cl.: H02M 1/12, H05B 41/28

(54) **SCHALTUNG ZUR KORREKTUR DES LEISTUNGSFAKTORS**
CIRCUIT FOR CORRECTING THE POWER FACTOR
CIRCUIT DE CORRECTION DU FACTEUR DE PUISSANCE

(30) Priorität: 30.03.1999 DE 19914505
(43) Veröffentlichungstag der Anmeldung: 18.04.2001
(73) Patentinhaber: Patent-Treuhand-Gesellschaft für elektrische Glühlampen mbH, 81543 München (DE)
(72) Erfinder: LEHNERT, Klaus, D-01705 Freital (DE); GÜLDNER, Henry, D-01809 Heidenau (DE); RAISER, Franz, D-80689 München (DE)
(86) Internationale Anmeldenummer: PCT/DE2000/000461
(87) Internationale Veröffentlichungsnummer: WO 2000/064037

(56) Entgegenhaltungen:
- CHEN W ET AL: "AN IMPROVED CHARGE PUMP ELECTRONIC BALLAST WITH LOW THD AND LOW CREST FACTOR" ANNUAL APPLIED POWER ELECTRONICS CONFERENCE AND EXPOSITION (APEC),US,NEW YORK, IEEE, Bd. CONF. 11, 1996, Seiten 622-627, XP000585906 ISBN: 0-7803-3045-5 in der Anmeldung erwähnt
- WU T -F ET AL: "ANALYSIS AND DESIGN OF A HIGH POWER FACTOR, SINGLE-STAGE ELECTRONICBALLAST WITH DIMMING FEATURE" APEC. ANNUAL APPLIED POWER ELECTRONICS CONFERENCE AND EXPOSITION,US,NEW YORK, IEEE, Bd. CONF. 12, 1997, Seiten 1030-1036, XP000731062 ISBN: 0-7803-3705-0
- CHAE G ET AL: "HIGH POWER FACTOR CORRECTION CIRCUIT FOR LOW-COST ELECTRONIC BALLASTS" ELECTRONICS LETTERS,GB,IEE STEVENAGE, Bd. 33, Nr. 11, 22. Mai 1997 (1997-05-22), Seiten 921-922, XP000727008 ISSN: 0013-5194

## Beschreibung

Die vorliegende Erfindung betrifft eine Schaltung zur Korrektur des Leistungsfaktors. Derartige Schaltungen sind auch unter der Bezeichnung "charge pumps" oder "Pumpschaltungen" bekannt. Sie werden beispielsweise eingesetzt, um der Norm IEC 1000-3-2, in der die Elektroversorgungsunternehmen die zulässigen Netzstromoberschwingungen definiert haben, zu genügen. Demnach ist die Entnahme von hochfrequenter Energie aus dem Stromversorgungsnetz nicht erwünscht. Der Netzstrom, der dem Netz entzogen wird, ist im Optimalfall proportional zur Netzspannung. Eine Proportionalität zwischen Netzstrom und Netzspannung ermöglicht die maximale Energieübertragung pro vorgegebener Leitungsdimensionierung. Blindströme, die bei Unproportionalität zwischen Netzspannung und Netzstrom auftreten würden, würden Leitungsverluste verursachen, die die Leitungen zusätzlich belasten und daher zu einer Störung anderer Verbraucher führen.

Unter anderem werden derartige Schaltungen zur Korrektur des Leistungsfaktors eingesetzt für Vorschaltgeräte zum Betrieb von Gasentladungslampen.

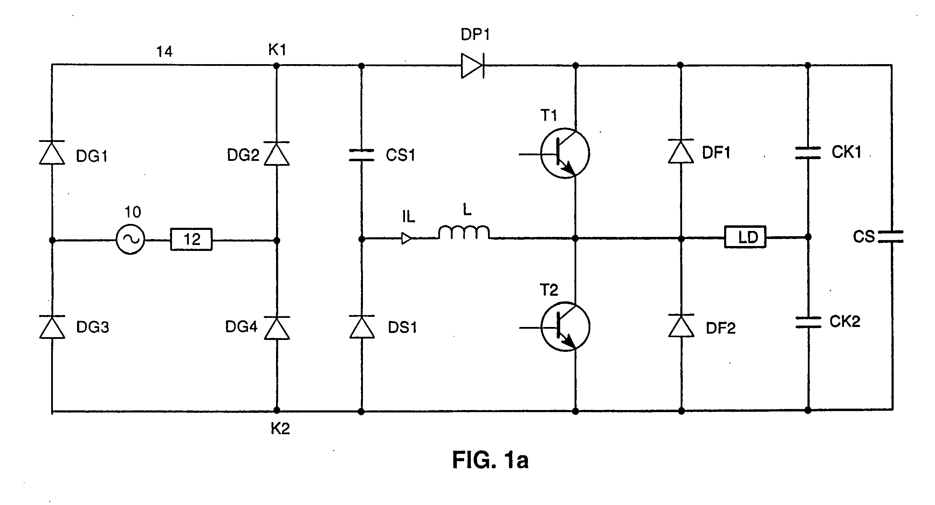

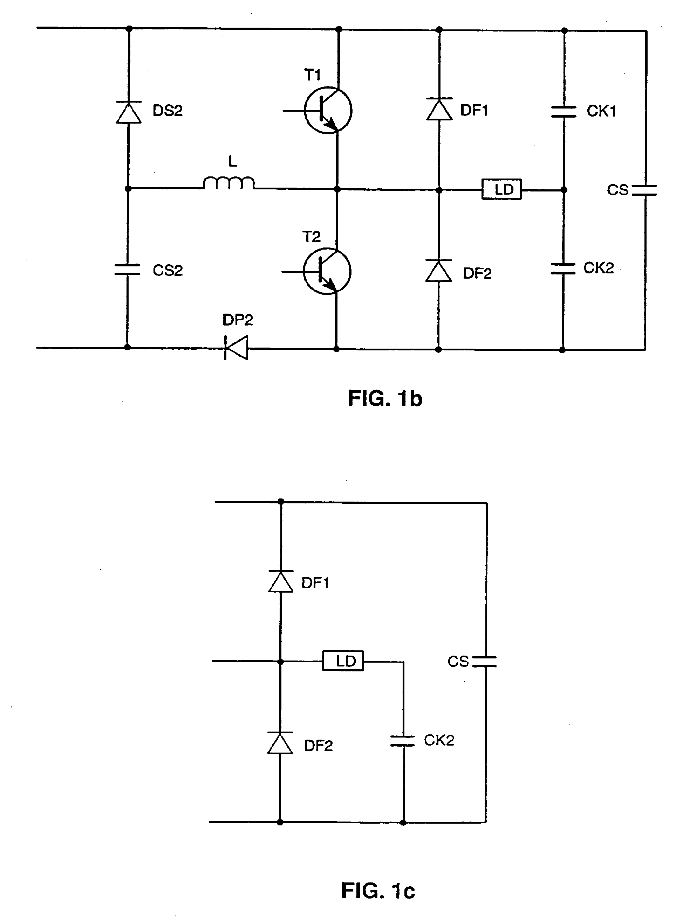

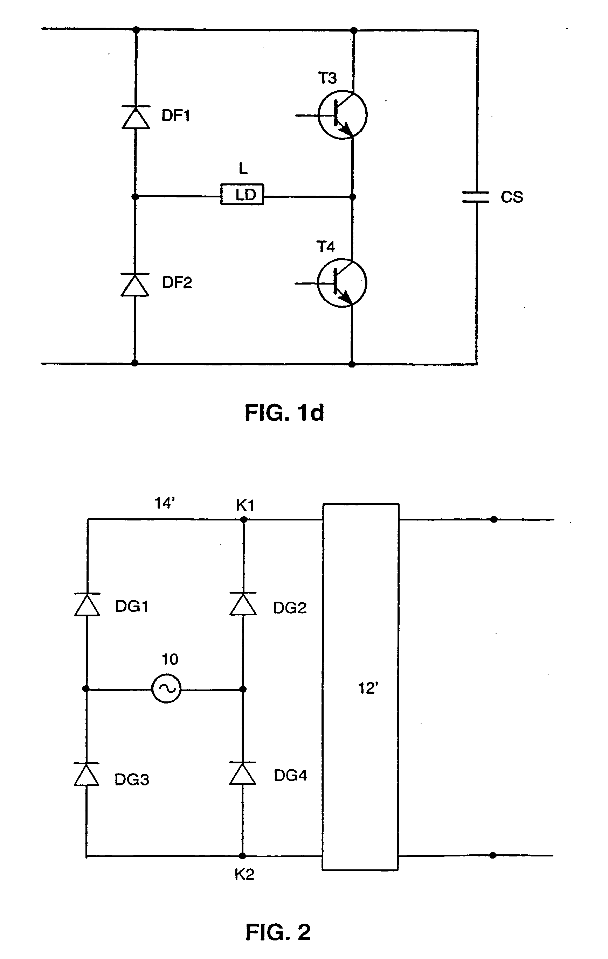

Die vorliegende Erfindung geht aus von einem Stand der Technik wie er bekannt ist aus dem Aufsatz von W. Chen, F. Lee und T. Yamauchi mit dem Titel "An Improved "Charge Pump" Electronic Ballast with Low THD and Low Crest Factor", erschienen in IEEE Transactions on Power Electronics, Vol. 12, No. 5, September 1997, Seiten 867 bis 875. Mit Bezug auf die dortige Fig. 8 lag diesem Aufsatz die Problematik zugrunde, die Schaltung gegenüber der dortigen Fig. 1 derart zu modifizieren, daß die Spannung am Punkt A, d.h. V, (siehe Darstellung in der dortigen Fig. 7), konstante Hf-Amplitude aufweist. Damit würde erreicht, daß die dem Netz entnommene Energie der Netzspannung proportional ist . Um dies zu gewährleisten, wurden die Dioden Da₁ und Da₂ eingeführt, wodurch der Punkt A an den Kondensator C_{B} geklemmt wird. Dadurch werden Rückwirkungen von der Last ausgeschaltet und ein bezüglich der Hf-Amplitude konstantes Vₐ erhalten, siehe die Darstellung in der dortigen Fig. 9.

Nachteilig an der Schaltung gemäß Fig. 8 dieser Veröffentlichung ist, daß durch die Diode Da₂ auch die Lampenspannung begrenzt wird. Ohne Zwischenschaltung eines Übertragers zwischen der Pumpschaltung und der zu betreibenden Lampe kann daher die nötige Zündspannung nicht erzeugt werden. Bei Massenprodukten wie Vorschaltgeräten für Lampen sind die Zusatzkosten für einen Übertrager unerwünscht.

Der vorliegenden Erfindung liegt deshalb die Aufgabe zugrunde, eine Schaltung zur Korrektur des Leistungsfaktors, d.h. eine Pumpschaltung bereitzustellen, die ohne Übertrager auskommt. Ein Beispiel solcher Schaltung ist aus dem Aufsatz von G. Chae, Y.S. Youn, G.H. Cho. "High power factor correction circuit for low-cost electronic ballasts", erschienen in Electronics letters, 1997, vol. 33, No. 11, Seiten 921-922, zu entnehmen.

Diese Aufgabe wird gelöst durch eine Schaltung mit einem Gleichrichter, der eingangsseitig mit einer Wechselspannungsquelle verbindbar ist und der ausgangsseitig mit mindestens einer Serienschaltung aus einem Kondensator und einer Diode verbunden ist, wobei die Diode so angeordnet ist, daß der Kondensator vom Ausgangssignal des Gleichrichters nicht durch die Diode geladen werden kann. Sie umfaßt weiterhin einen ersten und einen zweiten elektronischen Schalter in Serienschaltung als Teil einer Halb- oder Vollbrücke, mit jeweils einer parallel zu jedem Schalter geschalteten Freilaufdiode, wobei der vom Verbindungspunkt zwischen dem ersten und zweiten Schalter gebildete eine Ausgangsanschluß der Halb- oder Vollbrücke einerseits über eine Induktivität mit einem Punkt auf der Verbindung von Kondensator und Diode jeder Serienschaltung aus Kondensator und Diode verbunden ist, andererseits einen Anschluß für eine Last bildet, wobei das Signal an diesem Anschluß im Betrieb wesentlich höhere Frequenz aufweist als das Ausgangssignal der Wechselspannungsquelle. Sie weist weiterhin einen Speicherkondensator auf, der parallel zu den beiden Schaltern geschaltet ist, sowie mindestens eine weitere Diode, die derart zwischen dem Speicherkondensator und dem Gleichrichter angeordnet ist, daß ein Entladen des Speicherkondensators durch den Gleichrichter verhindert wird.

Die Erfindung bietet zum einen den Vorteil zusätzlicher Freiheitsgrade bei der Dimensionierung der Elemente des Pump- und Lastkreises durch weitestgehende Rückwirkungsfreiheit zwischen beiden Kreisen. Sie ermöglicht darüber hinaus eine einfache Einstellbarkeit der Lampenleistung durch entsprechende Dimensionierung des Kondensators CS1 bzw. der Kondensatoren CS1, CS2 derart, daß die Spannung des Kondensators bzw. der Kondensatoren mindestens einmal den jeweils momentanen Wert der speisenden, gleichgerichteten Wechselspannung erreicht, wobei angenommen werden kann, daß bei Betrachtung eines Ladezyklusses die gleichgerichtete Wechselspannung konstant ist. Darüber hinaus hängt die Energie, die in die Last gepumpt werden soll, nur ab vom Kapazitätswert des Kondensators CS1 bzw. den Kapazitätswerten der Kondensatoren CS1 und CS2. Die Induktivität der Drossel L muß bzw. kann klein sein, sie muß lediglich so dimensioniert sein, daß die elektrischen Schalter strommäßig nicht überlastet werden und das Einschalten derselben bei der Spannung 0 (ZVS) erhalten bleibt.

Bei einer vorteilhaften Weiterbildung ist zwischen den Eingängen des Gleichrichters ein Filter angeordnet, das bei Verbindung der Schaltung mit einer Wechselspannungsquelle seriell oder parallel zur Wechselspannungsquelle angeordnet ist. Zusätzlich oder alternativ hierzu kann seriell oder parallel zum Ausgang des Gleichrichters ein Filter angeordnet sein.

In einer ersten Ausführungsform umfaßt die Schaltung eine Serienschaltung aus Diode und Kondensator sowie eine weitere Diode. Bei einer weiteren Ausführungsform, die ein Pumpen im Ein-Zustand jedes der beiden Schalter ermöglicht, d.h. einer Symmetrierung der zuvor erwähnten Ausführungsform, umfaßt die Schaltung zwei Serienschaltungen aus Diode und Kondensator sowie zwei weitere Dioden.

Wie bereits erwähnt, kann die Schaltung in Form einer Halb- oder einer Vollbrücke betrieben werden. Bei einer Vollbrücke umfaßt die Schaltung zwei weitere Schalter, wobei der Verbindungspunkt der zwei weiteren Schalter den zweiten Lastanschluß bildet. Im Falle einer Halbbrücke umfaßt die Schaltung zwei Koppelkondensatoren, wobei der Verbindungspunkt zwischen den beiden Koppelkondensatoren den zweiten Lastanschluß bildet und wobei die Serienschaltung der beiden Koppelkondensatoren parallel zum Speicherkondensator angeordnet ist. Alternativ hierzu kann sie auch nur einen Koppelkondensator umfassen, dessen einer Anschluß den zweiten Lastanschluß bildet, wobei sein zweiter Anschluß mit einem der beiden Anschlüsse des Speicherkondensators verbunden ist.

Weitere vorteilhafte Weiterbildungen der Erfindung sind in den Unteransprüchen definiert.

Unter Hinweis auf die beigefügten Zeichnungen werden im folgenden Ausführungsbeispiele der Erfindung näher beschrieben. Es stellen dar:
- Fig. 1a: eine erste Ausführungsform der erfindungsgemäßen Schaltung mit Halbbrücke und zwei Koppelkondensatoren;
- Fig. 1b: eine zu der in Fig. 1a dargestellten Ausführungsform alternative Ausführungsform;
- Fig. 1c: eine Alternative zum Lastanschluß gemäß Fig. 1a unter Verwendung einer Halbbrücke mit einem Koppelkondensator;
- Fig. 1d: eine Alternative zum Lastanschluß gemäß den Ausführungsformen der Figuren 1a und 1c mit einer Vollbrücke;
- Fig. 2: eine Alternative zu den Ausführungsformen gemäß den Figuren 1a, 1b, 1c mit parallel zum Gleichrichter angeordnetem Filter;
- Fig. 3: eine weitere Ausführungsform, die hinsichtlich den Ausführungsformen gemäß den Figuren 1 und 2 symmetriert ist.

Fig. 1a zeigt eine Schaltung mit einer Wechselspannungsquelle 10, die seriell zu einem Filter 12 angeordnet ist. Als Wechselspannungsquelle 10 kann die Netzspannung verwendet werden. Das Filter 12 dient dazu, zu verhindern, daß einerseits Hochfrequenzenergie aus der Wechselspannungsquelle entnommen wird, andererseits, daß Hochfrequenzsignale in die Wechselspannungsquelle eingespeist werden. Es handelt sich daher um ein Tiefpaßfilter, das beispielsweise als Drossel realisiert sein kann.

Wechselspannungsquelle 10 und Filter 12 sind mit den Eingängen eines Gleichrichters 14 verbunden, der die vier Dioden DG1, DG2, DG3 und DG4 umfaßt. Alternativ zur gezeigten Verschaltung kann das Filter 12 auch parallel zu den Eingangsanschlüssen des Gleichrichters angeordnet sein, wobei es dann bei geringem Aufwand als Kondensator realisiert sein kann. Parallel zu den Ausgangsklemmen K1, K2 des Gleichrichters liegt die Serienschaltung aus einem Kondensator CS1 und einer Diode DS1. Der Kondensator CS1 ist über eine Diode DP1 mit der Serienschaltung zweier elektrischer Schalter T1 und T2 verbunden, denen jeweils Freilaufdioden DF1 und DF2 parallel geschaltet sind. Der Verbindungspunkt der beiden Schalter T1 und T2 ist zum einen über eine Induktivität L mit dem Verbindungspunkt zwischen dem Kondensator CS1 und der Diode DS1 verbunden und stellt zum anderen einen Anschluß für die Last LD dar.

Da bei der Ausführungsform gemäß Fig. 1a die Last LD an den Ausgangsklemmen einer Halbbrücke angeschlossen ist, wird der zweite Lastanschluß vom Verbindungspunkt zweier Koppelkondensatoren CK1, CK2 gebildet, die parallel zu den Schaltern T1 und T2 angeordnet sind. Parallel zu den Koppelkondensatoren CK1 und CK2 ist in der Schaltung gemäß Fig. 1a ein Speicherkondensator CS angeordnet.

Bei Realisierung der elektronischen Schalter T1 bzw. T2 durch Feldeffekttransistoren ist zu berücksichtigen, daß die Freilaufdioden DF1 und DF2 bereits in den Feldeffekttransistoren enthalten sind.

Zur Funktion der Schaltung gemäß Fig. 1a: Die Betriebsfrequenz der beiden elektrischen Schalter, die gegenphasig betrieben werden, ist gegenüber der Frequenz der Wechselspannungsquelle hochfrequent. Beispielsweise 50 kHz gegenüber 50 Hz, d.h. die beiden Transistoren werden abwechselnd für jeweils 10 µsec eingeschaltet. Während der Zeit, während der der Schalter T2 eingeschaltet ist, fließt Strom aus dem Gleichrichter 14 über die Klemme K1 durch den Kondensator CS1 und über die Induktivität L und den elektrischen Schalter T2 zur Klemme K2 des Gleichrichters. Der Kondensator CS1 und die Induktivität L sind hierbei so dimensioniert, daß der Kondensator CS1 bereits vor dem Ausschalten des Schalters T2 auf die momentane Spannung der Wechselspannungsquelle 10 aufgeladen wird.

Sobald CS1 auf die momentane Spannung der Wechselspannungsquelle aufgeladen ist, liegt an beiden Seiten der Diode DS1 dasselbe Potential, was dazu führt, daß die Diode DS1 leitet. Auch wenn CS1 bereits seinen endgültigen Ladezustand erreicht hat, treibt die Induktivität L den Strom weiter, der nunmehr in dem Kreis aus Diode DS1, Induktivität L und Schalter T2 fließt. Die während dieses Kreislaufs in der Induktivität L gespeicherte Energie ist proportional zur momentanen Spannung der Wechselspannungsquelle. Damit ist die Energie für die restliche Einschaltzeit des Schalters T2 in diesem Kreis deponiert. Wenn beispielsweise wie im obigen Beispiel die gesamte Einschaltzeit von T210 µsec beträgt, der endgültige Ladezustand von CS1 bereits nach 8 µsec erreicht wird, so verbleiben 2 µsec, während derer die Energie in diesem Kreislauf gespeichert ist. Nach dem Ausschalten des Schalters T2, d.h der Schalter befindet sich nunmehr im nichtleitenden Zustand, fließt die in dem zuvor erwähnten Kreislauf gespeicherte Energie über die Freilaufdiode DF1 in den Speicherkondensator CS und wird dort abgeladen. Ein Zurückfließen der Energie vom Speicherkondensator CS zur Ausgangsklemme K1 des Gleichrichters wird durch die Pumpdiode DP1 verhindert.

Bei der beschriebenen Schaltung ist daher die einem Netz entnommene Energie immer proportional der Netzspannung, wodurch der eingangs erwähnten Anforderung an Proportionalität zwischen Netzstrom und Netzspannung genügt wird. Andererseits ermöglicht diese Schaltung den Betrieb der Last LD, insbesondere eine Zündung in dem Falle, daß die Last eine Gasentladungslampe darstellt, ohne die Zwischenschaltung eines Übertragers.

Die in Fig. 1b dargestellte Variante ist gegenüber der in Fig. 1a dargestellten Ausführungsform dahingehend modifiziert, daß ein Kondensator CS2 nunmehr während der Einschaltzeit des Schalters T1 geladen wird. Entsprechend ist eine Diode DS2 in Serienschaltung zum Kondensator CS2 vorzusehen, die allerdings nunmehr beide hinsichtlich ihrer Position gegenüber den Ausgangsklemmen des Gleichrichters 14 vertauscht sind. In entsprechender Weise ist eine Diode DP2 zwischen Kondensator CS2 und Schalter T2 geschaltet, um ein Entladen des Speicherkondensators CS zu verhindern.

Fig. 1c zeigt eine Ausführungsform unter Verwendung nur eines Koppelkondensators CK2. Alternativ hierzu könnte anstelle von CK2 der Koppelkondensator CK1 in seiner Verschaltung gemäß Fig. 1a oder 1b dieselbe Funktion übernehmen, die darin besteht, den Gleichstromanteil zu beseitigen. Die Koppelkondensatoren können vorzugsweise als Folienkondensatoren, die Speicherkondensatoren vorzugsweise als Elektrolytkondensatoren realisiert werden.

Während die Ausführungsformen gemäß den Figuren 1a bis 1c einen Anschluß der Last LD an den Ausgangsklemmen von Halbbrücken gezeigt haben, ist in Fig. 1d eine Realisierung der erfindungsgemäßen Idee in einer Schaltung mit einer Vollbrücke dargestellt. Diese umfaßt weiterhin die elektrischen Schalter T3 und T4.

Fig. 2 zeigt eine gegenüber Fig. 1a alternative Verschaltung eines Tiefpaßfilters 12' an den Ausgangsklemmen K1 und K2 des Gleichrichters 14'. Während die gezeigte Ausführungsform eine parallele Anordnung des Filters 12' vorsieht, kann dieses auch seriell zu den Ausgangsklemmen K1 und K2 verschaltet sein. In einer besonders einfachen Ausbildung kann das Filter 12' bei paralleler Anordnung zu den Ausgangsklemmen K1 und K2 durch einen Kondensator, bei serieller Anordnung als Drossel realisiert sein.

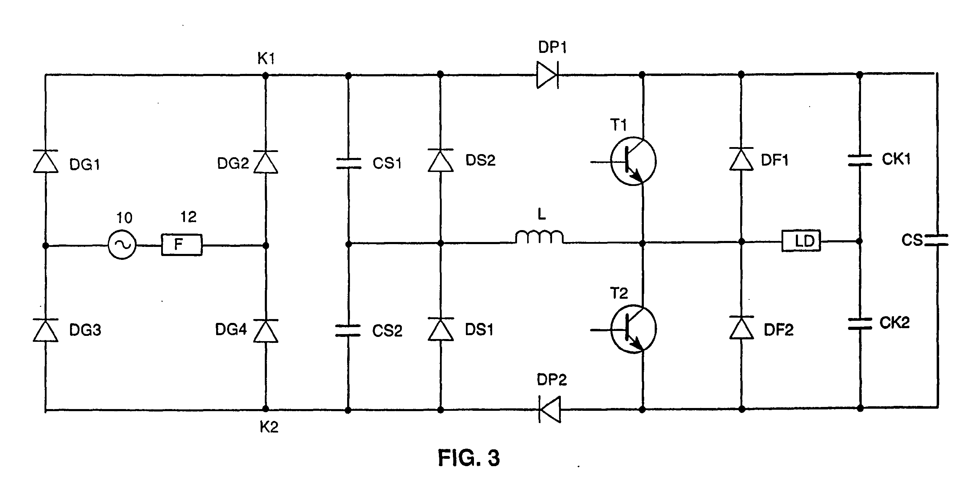

Fig. 3 zeigt eine besonders bevorzugte Ausführungsform, bei der die Lösungen gemäß den Ausführungsformen von Fig. 1a und Fig. 1b sowohl hinsichtlich der schaltungstechnischen Realisierung als auch hinsichtlich der Funktionsweise kombiniert sind, d.h. eine Entnahme von Energie aus der Wechselspannungsquelle 10 erfolgt sowohl während der Einschaltzeit von T2 als auch der von T1 Für den Fachmann ist offensichtlich, daß sich die Schaltung gemäß Fig. 3 auch mit den Varianten gemäß der Fig.1c, Fig. 1d und Fig. 2 realisieren läßt.

## Patentansprüche

1. Schaltung zur Korrektur des Leistungsfaktors mit
- einem Gleichrichter (14; 14'), der eingangsseitig mit einer Wechselspannungsquelle (10) verbindbar ist, und der ausgangsseitig mit mindestens einer Serienschaltung aus einem Kondensator (CS1; CS2) und einer Diode (DS1; DS2) verbunden ist, wobei die Diode (DS1; DS2) so angeordnet ist, daß der Kondensator (CS1; CS2) vom Ausgangssignal des Gleichrichters (14; 14') nicht durch die Diode (DS1; DS2) geladen werden kann,
- einem ersten und einem zweiten elektronischen Schalter (T1, T2) in Serienschaltung als Teil einer Halb- oder Vollbrücke, mit jeweils einer parallel zu jedem Schalter (T1; T2) geschalteten Freilaufdiode (DF1; DF2), wobei der vom Verbindungspunkt zwischen dem ersten und zweiten Schalter (T1, T2) gebildete eine Ausgangsanschluß der Halb- oder Vollbrücke einerseits über eine Induktivität (L) mit einem Punkt auf der Verbindung von Kondensator (CS1; CS2) und Diode (DS1; DS2) jeder Serienschaltung aus Kondensator (CS1; CS2) und Diode (DS1; DS2) verbunden ist, andererseits einen Anschluß für eine Last (LD) bildet, und das Signal an diesem Anschluß im Betrieb wesentlich höhere Frequenz aufweist als das Ausgangssignal der Wechselspannungsquelle (10),
- einem Speicherkondensator (CS), der parallel zu den beiden Schaltern (T1, T2) geschaltet ist, und
- mindestens einer weiteren Diode (DP1; DP2), die derart zwischen dem Speicherkondensator (CS) und dem Gleichrichter (14; 14') angeordnet ist, daß ein Entladen des Speicherkondensators (CS) durch den Gleichrichter (14; 14') verhindert wird.

2. Schaltung nach Anspruch 1, **dadurch gekennzeichnet, daß** zwischen den Eingängen des Gleichrichters (14; 14') ein Filter (12) angeordnet ist, das bei Verbindung der Schaltung mit einer Wechselspannungsquelle (10) seriell oder parallel zur Wechselspannungsquelle (10) angeordnet ist.

3. Schaltung nach Anspruch 1, **dadurch gekennzeichnet, daß** seriell oder parallel zum Ausgang des Gleichrichters (14; 14') ein Filter (12') angeordnet ist.

4. Schaltung nach Anspruch 1, **dadurch gekennzeichnet, daß** die Schaltung eine Serienschaltung aus Diode (DS1; DS2) und Kondensator (CS1; CS2) und eine weitere Diode (DP1; DP2) aufweist.

5. Schaltung nach Anspruch 1, **dadurch gekennzeichnet, daß** die Schaltung zwei Serienschaltungen aus Diode (DS1, DS2) und Kondensator (CS1, CS2) und zwei weitere Dioden (DP1, DP2) aufweist.

6. Schaltung nach Anspruch 1, **dadurch gekennzeichnet, daß** die Vollbrücke zwei weitere Schalter (T3, T4) umfaßt, wobei der Verbindungspunkt der zwei weiteren Schalter (T3, T4) den zweiten Lastanschluß bildet.

7. Schaltung nach Anspruch 1, **dadurch gekennzeichnet, daß** die Halbbrücke zwei Koppelkondensatoren (CK1, CK2) umfaßt, wobei der Verbindungspunkt zwischen den beiden Koppelkondensatoren (CK1, CK2) den zweiten Lastanschluß bildet und wobei die Serienschaltung der beiden Koppelkondensatoren (CK1, CK2) parallel zum Speicherkondensator (CS) angeordnet ist.

8. Schaltung nach Anspruch 1, **dadurch gekennzeichnet, daß** der Speicherkondensator von zwei Koppelkondensatoren (CK1, CK2) gebildet wird, die Teil der Halbbrücke sind, wobei der Verbindungspunkt zwischen den beiden Koppelkondensatoren (CK1, CK2) den zweiten Lastanschluß bildet.

9. Schaltung nach Anspruch 1, **dadurch gekennzeichnet, daß** sie nur einen Koppelkondensator (CK1; CK2) umfaßt, dessen einer Anschluß den zweiten Lastanschluß bildet, wobei sein zweiter Anschluß mit einem der beiden Anschlüsse des Speicherkondensators (CS) verbunden ist.

## Claims

1. Circuit for power-factor correction having
- a rectifier (14; 14') which can be connected on the input side to an AC voltage source (10) and which is connected on the output side to at least one series circuit comprising a capacitor (CS1; CS2) and a diode (DS1; DS2), with the diode (DS1; DS2) being arranged such that the capacitor (CS1; CS2) cannot be charged through the diode (DS1; DS2) by the output signal from the rectifier (14; 14'),
- a first and a second electronic switch (T1, T2) connected in series as part of a half bridge or full bridge, each having a freewheeling diode (DF1; DF2) connected in parallel with the switch (T1; T2) and, with the [lacuna] formed by the junction point between the first and second switches (T1, T2) [lacuna] an output connection of the half bridge or full bridge is on the one hand connected via an inductance (L) to a point on the connection of the capacitor (CS1; CS2) and diode (DS1; DS2) of each series circuit comprising a capacitor (CS1; CS2) and a diode (DS1; DS2), and on the other hand forms a connection for a load (LD), and the signal at this connection during operation is at a considerably higher frequency than the output signal from the AC voltage source (10),
- an energy-storage capacitor (CS) which is connected in parallel with the two switches (T1, T2) and
- at least one further diode (DP1; DP2) which is arranged between the energy-storage capacitor (CS) and the rectifier (14; 14') in such a manner that the energy-storage capacitor (CS) cannot be discharged through the rectifier (14; 14').

2. Circuit according to Claim 1, **characterized in that** a filter (12) is arranged between the inputs of the rectifier (14; 14') and, when the circuit is connected to an AC voltage source (10), is arranged in series or parallel with the AC voltage source (10).

3. Circuit according to Claim 1, **characterized in that** a filter (12') is arranged in series or parallel with the output of the rectifier (14; 14').

4. Circuit according to Claim 1, **characterized in that** the circuit has a series circuit comprising a diode (DS1; DS2), a capacitor (CS1; CS2) and a further diode (DP1; DP2).

5. Circuit according to Claim 1, **characterized in that** the circuit has two series circuits comprising a diode (DS1, DS2), a capacitor (CS1, CS2) and two further diodes (DP1, DP2).

6. Circuit according to Claim 1, **characterized in that** the full bridge comprises two further switches (T3, T4) with the junction point between the two further switches (T3, T4) forming the second load connection.

7. Circuit according to Claim 1, **characterized in that** the half bridge comprises two coupling capacitors (CK1, CK2), with the junction point between the two coupling capacitors (CK1, CK2) forming the second load connection, and with the series circuit comprising the two coupling capacitors (CK1, CK2) being arranged in parallel with the energy-storage capacitor (CS).

8. Circuit according to Claim 1, **characterized in that** the energy-storage capacitor is formed by two coupling capacitors (CK1, CK2) which are part of the half bridge, with the junction point between the two coupling capacitors (CK1, CK2) forming the second load connection.

9. Circuit according to Claim 1, **characterized in that** said circuit comprises only one coupling capacitor (CK1; CK2), one of whose connections forms the second load connection, with its second connection being connected to one of the two connections of the energy-storage capacitor (CS).

## Revendications

1. Circuit de correction du facteur de puissance comprenant
- un redresseur ( 14, 14') qui peut être relié du côté de l'entrée à une source (10) de tension alternative et qui est relié du côté de la sortie à au moins un circuit série composé d'un condensateur (CS1, CS2 ) et d'une diode ( DS1, DS2 ), la diode ( DS1, DS2) étant disposée de façon à ce que le condensateur ( CS1, CS2) ne puisse pas être chargé par la diode (DS1, DS2 ) par le signal de sortie du redresseur ( 14, 14'),
- un premier et un deuxième commutateur (T1, T2) électronique dans un circuit série comme partie d'un demi-pont ou d'un pont complet, ayant respectivement une diode ( DF1, DF2 ) de roue libre montée en parallèle à chaque commutateur ( T1, T2 ), l'une des bornes de sortie du demi-pont ou du pont complet, formée par le point de liaison entre le premier et le deuxième commutateur ( T1, T2 ), étant reliée d'une part par une inductance ( L ) à un point sur la liaison du condensateur ( CS1, CS2 ) et de diode ( DS1, DS2 ) de chaque circuit série composée d'un condensateur ( CS1, CS2 ) et d'une diode ( DS1, DS2) et formant d'autre part une borne pour une charge ( LD ), et le signal sur cette borne ayant en fonctionnement une fréquence sensiblement plus haute que le signal de sortie de la source ( 10 ) de tension alternative,
- un condensateur ( CS ) d'emmagasinage, qui est monté en parallèle aux deux commutateurs ( T1, T2 ),
- au moins une autre diode ( DP1, DP2 ) qui est montée entre le condensateur ( CS ) d'emmagasinage et le redresseur ( 14, 14' ) de façon à empêcher une décharge du condensateur ( CS ) d'emmagasinage par le redresseur ( 14, 14' ).

2. Circuit selon la revendication 1, **caractérisé en ce qu'**entre les entrées du redresseur ( 14, 14' ) est monté un filtre ( 12 ) qui, lors de la liaison du circuit à une source ( 10 ) de tension alternative est monté en série ou en parallèle avec la source ( 10 ) de tension alternative.

3. Circuit selon la revendication 1, **caractérisé en ce qu'**un filtre ( 12' ) est monté en série ou en parallèle à la sortie du redresseur ( 14, 14' ).

4. Circuit selon la revendication 1, **caractérisé en ce que** le circuit comporte un circuit série composé de diode ( DS1, DS2 ) et de condensateur ( CS1, CS2 ) et d'une autre diode ( DP1, DP2 ).

5. Circuit selon la revendication 1, **caractérisé en ce que** le circuit comporte deux circuits série composés de diode ( DS1, DS2 ) et de condensateur ( CS1, CS2 ) et de deux autres diodes ( DP1, DP2 ).

6. Circuit selon la revendication 1, **caractérisé en ce que** le pont complet comprend deux autres commutateurs ( T3, T4 ), dans lequel le point de liaison des deux autres commutateurs ( T3, T4 ) forme la deuxième borne de charge.

7. Circuit selon la revendication 1, **caractérisé en ce que** le demi-pont comprend deux condensateurs ( CK1, CK2 ) de couplage, dans lequel le point de liaison entre les deux condensateurs ( CK1, CK2 ) de couplage forme la deuxième borne de charge et dans lequel le circuit série des deux condensateurs ( CK1, CK2 ) de couplage est monté en parallèle aux condensateurs ( CS ) d'emmagasinage.

8. Circuit selon la revendication 1, **caractérisé en ce que** le condensateur d'emmagasinage est formé de deux condensateurs ( CK1, CK2 ) de couplage, qui font partie du demi-pont, dans lequel le point de liaison entre les deux condensateurs ( CK1, CK2 ) de couplage forme la deuxième borne de charge.

9. Circuit selon la revendication 1, **caractérisé en ce qu'**il comprend seulement un condensateur ( CK1, CK2 ) de couplage, dont l'une des bornes forme la deuxième borne de charge, sa deuxième borne étant reliée à l'une des deux bornes du condensateur ( CS ) d'emmagasinage.
